# EUROPEAN PATENT APPLICATION

(11) **EP 1 387 568 A2**
(43) Date of publication of application: **04.02.2004**
(21) Application number: 03016084.0
(22) Date of filing: 15.07.2003
(51) Int. Cl.: H04N 1/46

(54) **Printing system and layout data generation device**

(30) Priority: 29.07.2002 JP 2002219477; 29.07.2002 JP 2002219553
(71) Applicant: Dainippon Screen Mfg. Co., Ltd., Kyoto 602-8585 (JP)
(72) Inventor: Nagashima, Yuji, Dainippon Screen Mfg. Co.,Ltd., Horikawa-dori, Kamikyo-ku, Kyoto602-8585 (JP); Takada, Toshikazu, Dainippon Screen Mfg. Co.,Ltd., Horikawa-dori, Kamikyo-ku, Kyoto602-8585 (JP)
(74) Representative: Kilian, Helmut, Dr.

(57) **Abstract**

First layout information for printing-specific photograph data obtained by defining a layout of a print is combined with a recipe file, and an image conversion process is performed on the printing-specific photograph data, based on the combined recipe file. Second layout information associated with the printing-specific photograph data subjected to a CMYK conversion is created. Layout data in which the first layout information is replaced with the second layout information is used as print data. This provides the print subjected to an image correction process suitable for the photograph arranged for the layout and an individual image correction process required for each subject of a photograph, and improves processing efficiency.

An output device including a RIP processor further includes an image conversion processor for creating a recipe file and performing a CMYK conversion process and a correction process on the printing-specific photograph data represented in an RGB color system, based on the recipe file. If color reproduction is improper as a result of proof printing, the image conversion processor of the output device sets a recipe file for the printing-specific photograph data again, and then performs the image conversion process again and an output process. This provides suitable print data without the need to returning to the process in a layout data generation device to modify the entire layout data.

## Description

### BACKGROUND OF THE INVENTION

### Field of the Invention

The present invention relates to a technique for converting digital photograph data in a printing system for commercial printing.

### Description of the Background Art

With improvements in performance of digital cameras, digital cameras have been capable of producing images which bear comparison with those on photographs taken with conventional cameras with silver halide film. Accordingly, it has become more routine to use (or submit) raw photograph data obtained by photographing with digital cameras as printing-specific photographs for printing in place of analog photographs taken with conventional cameras with silver halide film. This entails a different procedure for generating print data than conventional procedures.

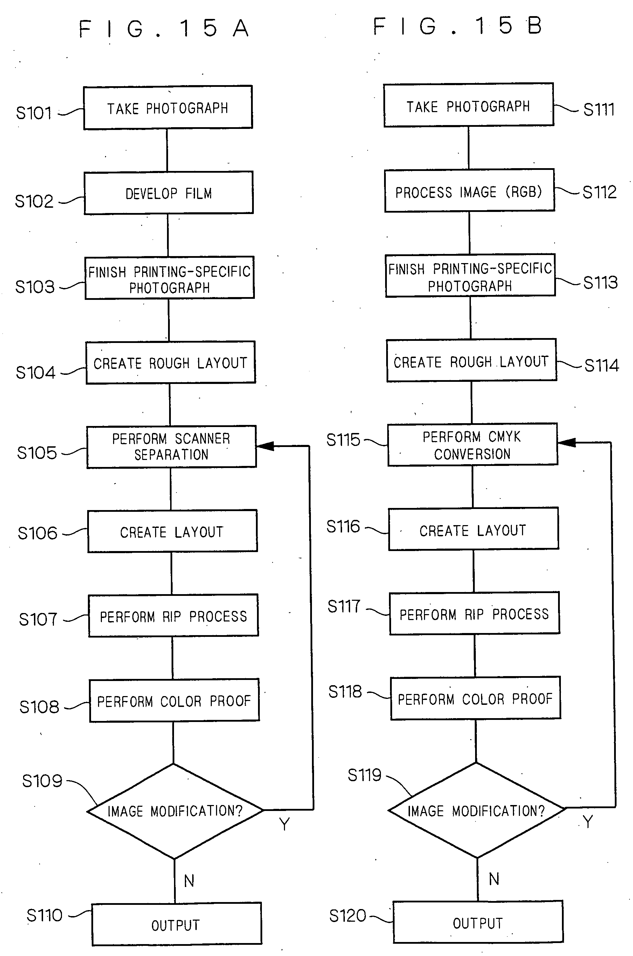

For instance, a procedure for processing an analog photograph when producing a print (printed matter) using the analog photograph is shown in Fig. 15A. First, a subject is photographed using a conventional camera with silver halide film (Step S101), and the film is developed (Step S102). This provides a printing-specific photograph (Step S103). Next, the printing-specific photograph is subjected to rough layout for determining schematic layout of a print to be produced (or the arrangement, size and orientation of the photograph on the print) (Step S104), and is then subjected to scanner separation for performing color separation in accordance with the CMYK color system (Step S105). The rough layout is done prior to the scanner separation since the scanner separation on the basis of the final layout is required to provide a print of the best quality. Layout software is used to arrange raw photograph data and text and line data read by a scanner (Step S106). After the layout is finished, print data including the details of the layout is transferred to a RIP (raster image processor) which in turn performs a rasterization process (or a RIP process) for converting the print data described as vector data for each of the plates of respective colors into raster data analyzable by a printing machine (Step S107). Thereafter, proof printing (galley proofing) for color proof is performed for each of the plates of respective colors (Step S108). If there is no problem in color reproducibility as a result of the proof printing, an output process is carried out. If the color reproducibility is insufficient, color designation or the like is modified, and the scanner separation is performed again (Steps S109, S110).

On the other hand, a procedure for processing using raw photograph data acquired by a digital camera is shown in Fig. 15B. First, a subject is photographed using a digital camera (Step S111), and then image processing such as trimming is performed by means of image processing software (Step S112). Since the raw photograph data acquired by photographing with the digital camera is generally based on the RGB color system, the image processing is also performed based on the RGB color system. The image processing finishes printing-specific photograph data in the form of digital data (Step S113). Next, the printing-specific photograph data is applied to layout software for rough layout of the entire print including printing-specific text and line data (Step S114). After the rough layout of the print is established, a CMYK conversion process is performed for converting the printing-specific photograph data into data represented in the CMYK color system by means of image processing software or the like (Step S115). The resultant data is associated with layout data (or the printing-specific data is replaced by the resultant data), whereby the layout is finished (Step S116). After the layout is finished, the RIP process and the proof printing for color proof are carried out (Steps S117 and S118), as in the case of the analog photograph. If there is no problem in color reproducibility as a result of the proof printing, an output process is carried out. If the color reproducibility is insufficient, color designation or the like during the CMYK conversion process is modified (Steps S119, S120).

The procedure of Fig. 15B using the raw photograph data acquired by photographing with the digital camera eliminates the need for development and page make-up processes, and allows the data to be processed in the form of digital data by means of software until the output process is reached. This is advantageous in significantly reduces the process steps.

However, the procedure of Fig. 15B using the printing-specific photograph data in the form of digital data is similar to the procedure of Fig. 15A using the analog photograph in that the CMYK conversion of the printing-specific photograph data is executable only after the rough layout is determined and the size of the printing-specific photograph data on the print is established. When a multiplicity of printing-specific photograph data are arranged for the layout on the single print data, the procedure of Fig. 15B involves the needs to perform the CMYK conversion individually on the multiplicity of printing-specific photograph data in accordance with the representation of different subjects and the details of the arrangement of the respective printing-specific photograph data for the layout, and to rearrange the multiplicity of printing-specific photograph data.

Further, the raw photograph data acquired by the digital camera, like the analog photograph, must be modified as required and processed again by tracing the procedure backwardly if the result of the proof printing is insufficient. Even though the image is treated as the digital data in all process steps until the output process, the procedure must be traced back to the layout process irrelevant to the color reproducibility. This has been a deterrent to improvements in processing efficiency.

### SUMMARY OF THE INVENTION

The present invention is intended for a technique for processing data about original copies in a printing system for commercial printing and, more particularly, for a processing technique when the data about original copies include raw photograph data acquired by a digital camera.

According to the present invention, a printing system includes at least one data processing device. The at least one data processing device comprises:a layout creation element for generating layout data about a print including a photograph represented by first printing-specific photograph data to hold layout information about the first printing-specific photograph data associated with a layout result, the first printing-specific photograph data being digital data represented in an RGB color system; a layout information combination element for combining the layout result with a setting file; a color space conversion element for converting the first printing-specific photograph data into second printing-specific photograph data, the second printing-specific photograph data being digital data represented in a CMYK color system; a correction element for correcting the second printing-specific photograph data; and a replacement element for changing the association between the layout result and the first printing-specific photograph data in the layout information into association between the layout result and the second printing-specific photograph data, the setting file describing details of processes to be executed by the color space conversion element, the correction element, and the replacement element, the layout data subjected to the association change being passed to a rasterization process.

Preferably, the at least one data processing device is one layout data generation device.

Thus, after the layout of the print is done, the layout information is combined with the setting file for image conversion process, and then the image conversion process is performed for converting the printing-specific photograph data represented in the RGB color system into the data represented in the CMYK color system for printing. This allows the execution of the image correction process suitable for photographs being arranged for the layout without the need to manually set the sizes of individual printing-specific photograph data one by one.

According to another aspect of the present invention, the layout creation element and the layout information combination element are provided in one layout data generation device, and the remaining elements are provided in a print data processing device different from the layout data generation device. The print data processing device further comprises: a rasterization process element for rasterizing the layout data subjected to the association change to generate print data; and a setting file creation element for creating and modifying the setting file. The print data processing device causes the setting file creation element to set a new setting file again and to perform an image conversion process again based on the new setting file when proof printing based on the print data produces an improper result.

Thus, the printing system is capable of performing the image conversion process for converting the printing-specific photograph data represented in the RGB color system into the data represented in the CMYK color system for printing to perform the predetermined correction process. Additionally, the printing system is capable of creating and modifying the setting file about the details of the image conversion process. Therefore, if there is a problem in color reproducibility of certain printing-specific photograph data as a result of proof printing, the printing system can set again the setting file corresponding to only the certain printing-specific photograph data having the problem, and perform the image conversion process again based on the setting file set again without the need to modify the entire layout data.

It is therefore an object of the present invention to provide a printing system capable of adding layout information to a setting file for image processing of printing-specific photograph data, thereby to perform the image processing on the printing-specific photograph data in consideration for the layout information, and of automatically replacing original printing-specific photograph data with the printing-specific photograph data subjected to a color space conversion.

It is another object of the present invention to provide a printing system capable of modifying layout data during a rasterization stage without the need to trace the procedure of production back to a layout stage.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram of a printing system according to the present invention;
Fig. 2 is a diagram for illustrating functions implemented in a controller of a printing-specific photograph generation device;
Fig. 3 is a diagram for illustrating functions implemented in a controller of a layout data generation device according to a first preferred embodiment;
Figs. 4A and 4B schematically show file structures of recipe files;
Fig. 5 shows a setting item table including a list of setting items of characteristic setting parameters;
Fig. 6 shows a correction detail table including a list of details of image corrections required for image processing of typical subjects;
Fig. 7 shows a table including a typical processing menu of fine adjustment parameters;
Fig. 8 illustrates a procedure for generation of print data in the layout data generation device according to the first preferred embodiment;
Figs. 9A and 9B show a relationship between a parameter of a sharpness process and a scaling factor of an image;
Figs. 10A and 10B illustrate changes in color density profile depending on the sharpness process;
Fig. 11 is a diagram for illustrating functions implemented in the controller of the layout data generation device according to a second preferred embodiment;
Fig. 12 is a diagram for illustrating functions implemented in a controller of an output device according to the second preferred embodiment;
Fig. 13 illustrates a procedure of processing from the generation of layout data to a RIP process according to the second preferred embodiment;
Fig. 14 is a flowchart illustrating a procedure of processing from the RIP process to an output process; and
Figs. 15A and 15B are flowcharts illustrating conventional procedures for print layout process.

### DESCRIPTION OF THE PREFERRED EMBODIMENTS

### First Preferred Embodiment

### <System Construction>

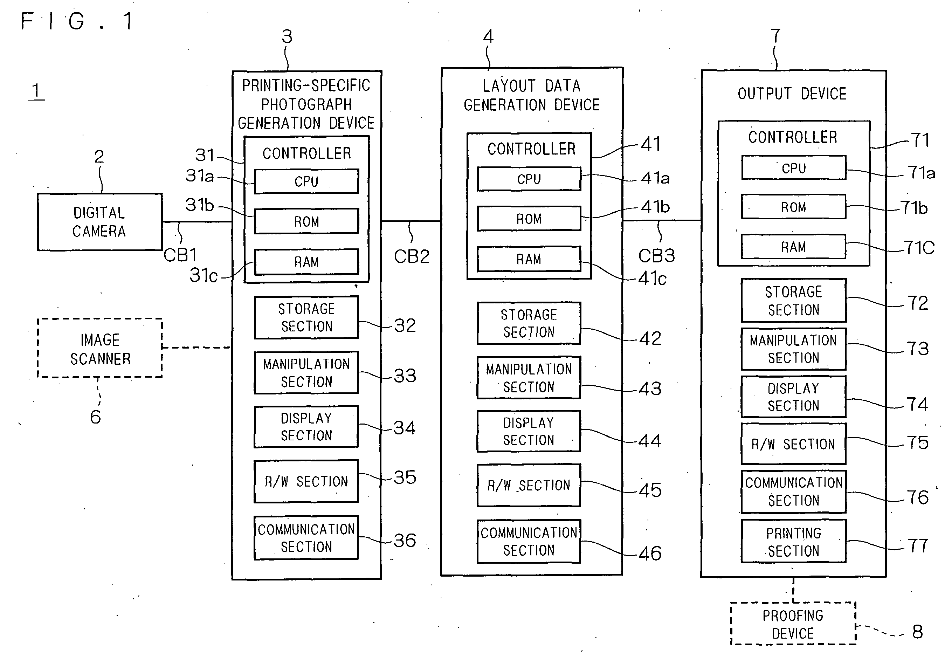

Fig. 1 is a block diagram of a printing system 1 according to the present invention. The printing system 1 principally comprises: a printing-specific photograph generation device 3 for generating printing-specific photograph data suitable for printing from raw photograph data acquired by a digital camera 2; a layout data generation device 4 for doing the layout of a print to be produced by using the printing-specific photograph data, document data, line data and the like; and an output device 7 for rasterizing (or performing a RIP process on) print data and thereafter for printing. The output device 7 is a combination of a RIP device and a printing device. The raw photograph data may be acquired by an input device such as an image scanner 6. The printing system 1 may further comprise a proofing device 8 for performing proof printing based on the rasterized print data. An example of the proofing device 8 is a DDCP (Direct Digital Color Proofer).

The digital camera 2 used herein has a resolution sufficient for acquisition of an image of satisfactory image quality required as a print, and preferably a resolution of at least six million pixels. The raw photograph data acquired by the digital camera 2 is represented in the RGB color system. The acquired raw photograph data is transferred to the printing-specific photograph generation device 3 by establishing a connection through a connection cable CB1 such as an USB cable between the digital camera 2 and the printing-specific photograph generation device 3 or by recording the raw photograph data on a portable recording medium (not shown) recordable in the digital camera 2 and reading the recorded raw photograph data in the printing-specific photograph generation device 3.

The printing-specific photograph generation device 3 is implemented by a general-purpose personal computer. Specifically, the printing-specific photograph generation device 3 principally comprises: a controller 31 including a CPU 31a, a ROM 31b and a RAM 31c for implementing functions to be described later; a storage section 32 including a hard disk for storing the raw photograph data received from the digital camera 2 and the like; a manipulation section 33 including a mouse and a keyboard for entering various commands by an operator; a display section 34 including a display device; an R/W section 35 for reading/writing data from/to various portable recording media; and a communication section 36 serving as an interface for transferring data to and from other devices.

The layout data generation device 4 is also implemented by a general-purpose personal computer, and is basically similar in construction to the printing-specific photograph generation device 3. Specifically, the layout data generation device 4 principally comprises: a controller 41 including a CPU 41a, a ROM 41b and a RAM 41c for implementing functions to be described later; a storage section 42; a manipulation section 43; a display section 44; an R/W section 45; and a communication section 46. The layout data generation device 4 is capable of doing the layout of a print while displaying an operating state on the display section 44, based on the details of a command entered via the manipulation section 43.

The output device 7 comprises components whose functions are implemented by a computer, that is, a controller 71 including a CPU 71a, a ROM 71b and a RAM 71c for implementing functions to be described later; a storage section 72; a manipulation section 73; a display section 74; an R/W section 75; and a communication section 76. The output device 7 further comprises a printing section 77 for performing printing on a predetermined printing sheet.

Data transfer between the printing-specific photograph generation device 3 and the layout data generation device 4 and between the layout data generation device 4 and the output device 7 may be carried out through communication lines CB2 and CB3, respectively, or through a portable recording medium.

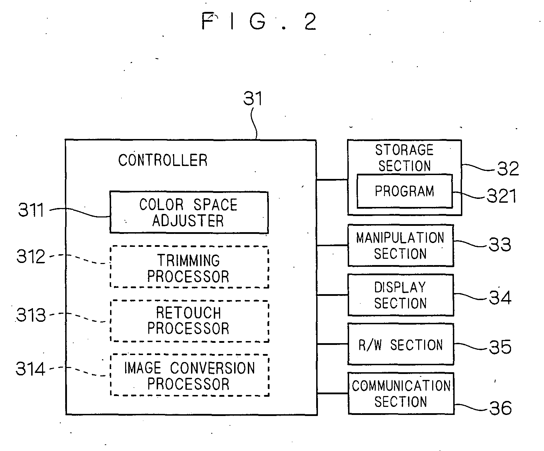

Fig. 2 is a diagram illustrating the functions implemented in the controller 31 of the printing-specific photograph generation device 3. In the controller 31, a color space adjuster 311 is implemented by the execution of a predetermined program 321 stored in the storage section 32 under the action of the CPU 31a, the ROM 31b and the RAM 31c.

The color space adjuster 311 performs a color space conversion process for converting the raw photograph data described based on a color space inherent in the digital camera 2 into device-independent photograph data (independent of the type of display device) described based on a device-independent color space. This conversion allows the reproduction of the same image on other display devices such as those of the layout data generation device 4 and the output device 7 if the device-independent photograph data is transferred as the printing-specific photograph data to such display devices.

By executing a predetermined program, the printing-specific photograph generation device 3 may comprise a trimming processor 312 for trimming off unnecessary portions of an image, and a retouch processor 313 for performing a retouch process for erasing or replacing an unnecessary image portion.

When comprising these processors 312 and 313, the printing-specific photograph generation device 3 performs the color space conversion process after the trimming and retouch processes. The device-independent photograph data obtained by the execution of the color space conversion process is transferred as the printing-specific photograph data to the layout data generation device 4.

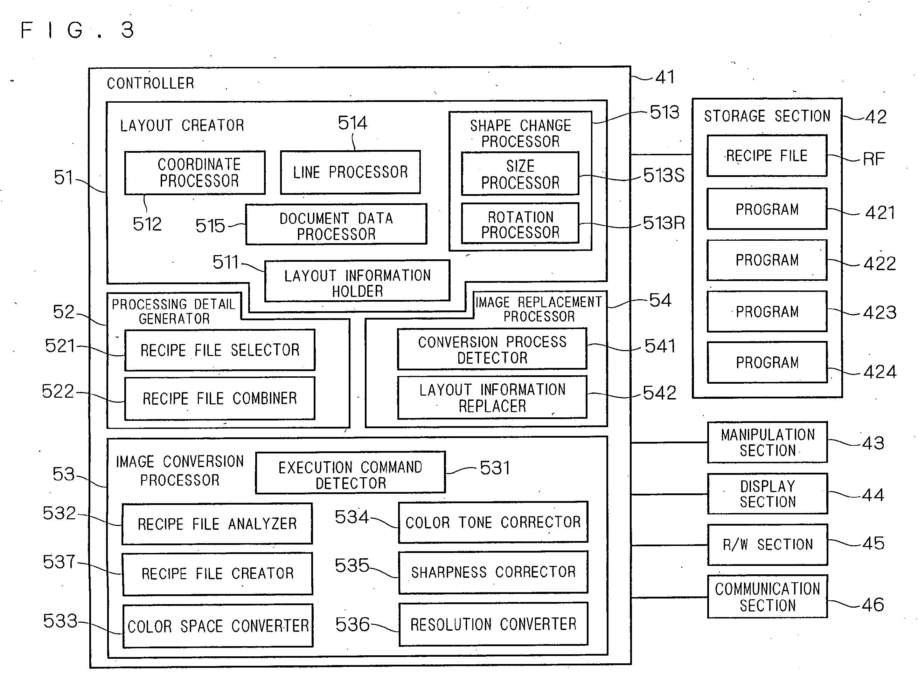

Fig. 3 is a diagram illustrating the functions implemented in the controller 41 of the layout data generation device 4. A layout creator 51, a processing detail generator 52, an image conversion processor 53, and an image replacement processor 54 are implemented in the controller 41 by the execution of predetermined programs 421 to 424 stored in the storage section 42 under the action of the CPU 41a, the ROM 41b and the RAM 41c. The layout creator 51 is implemented by the program 421 which is so-called layout software, and the processing detail generator 52 is implemented by the program 422. The image conversion processor 53 is implemented by the program 423 which is so-called image processing software, and the image replacement processor 54 is implemented by the program 424. The programs 422 and 424 are executed in the form of plug-in programs for the program 421.

The layout creator 51 is provided to generate layout data which specifies the arrangement of objects corresponding to respective elements (text, photograph, line) of a print for the layout. The image conversion processor 53 is provided to perform a CMYK conversion and a predetermined image correction process in accordance with the contents of a recipe file RF to be described later. The CMYK conversion is intended to convert the printing-specific photograph data in the RGB color system into printing-specific photograph data represented in the CMYK color system for printing, and the predetermined image correction process is intended to enhance the texture of a subject which is irreproducible or is not enhanced on the print. The processing detail generator 52 is provided to combine layout information (photograph layout information) specified for the printing-specific photograph data by the layout creator 51 with the recipe file RF. The inclusion of the layout information in the recipe file RF enables the image conversion processor 53 to perform the conversion process and the image correction process with consideration given to the conditions (size, orientation and the like) of the printing-specific photograph data actually arranged for the layout. The image replacement processor 54 is provided to replace the layout information associated with the printing-specific photograph data, included in the layout data, based on the RGB color system used when the layout is done, with layout information associated with the printing-specific photograph data after the CMYK conversion, which is obtained by the image conversion processor 53.

To define the layout of a print, the layout creator 51 principally comprises a layout information holder 511, a coordinate processor 512, a shape change processor 513, a line processor 514, and a document data processor 515. An operator selects an object stored in the storage section 42 by means of the manipulation section 43 and then drags and drops the selected object, or directly creates data by means of the manipulation section 43, to cause the components of the layout creator 51 to function, thereby doing the layout of the print. In the layout process, the raw photograph data represented in the RGB color system is treated as it is.

The layout information holder 511 always holds the latest version of the layout information (coordinates, size, rotation) determined by arranging the objects for the layout in the components to be described next, and updates the layout information each time a change of the layout is made. During the arrangement of the printing-specific photograph data for the layout, changes are made only to the data displayed on a screen of the display section 44 and to the layout information, but data about the original objects remains held in the storage section 42. Thus, the layout information contains file information for association with an original photograph data file.

The coordinate processor 512 sets the coordinates of each object to be arranged for the layout, based on a setting command through the manipulation section 43. For rectangular printing-specific photograph data as an example, the coordinate processor 512 determines the coordinate position thereof using the upper-left comer thereof as a reference point in accordance with the setting command.

The shape change processor 513 performs a shape change process on each object to be arranged for the layout, based on a setting command through the manipulation section 43. The shape change processor 513 includes a size processor 513S for changing the size (length and width) of an area occupied by an object on the print, and a rotation processor 513R for changing the orientation (or posture) of an object.

The line processor 514 performs a variety of processes peculiar to the line data, such as the processes of changing the line type and line width. The line processor 514 is also responsible for processing when the operator uses the manipulation section 43 to directly create line data.

The document data processor 515 performs a variety of processes peculiar to the document data, such as the processes of arranging printing-specific text data and of setting and changing fonts and paragraphs. The document data processor 515 is also responsible for processing when the operator uses the manipulation section 43 to directly create document data.

The components of the layout creator 51 perform the above-mentioned various processes to determine the layout information for each object, whereby the layout of a desired print is defined. In other words, the layout data in which the layout information about each object is established is generated. The generated layout data is stored in the storage section 42. The layout information is then combined with the recipe file RF by the processing detail generator 52 for use in the image conversion process.

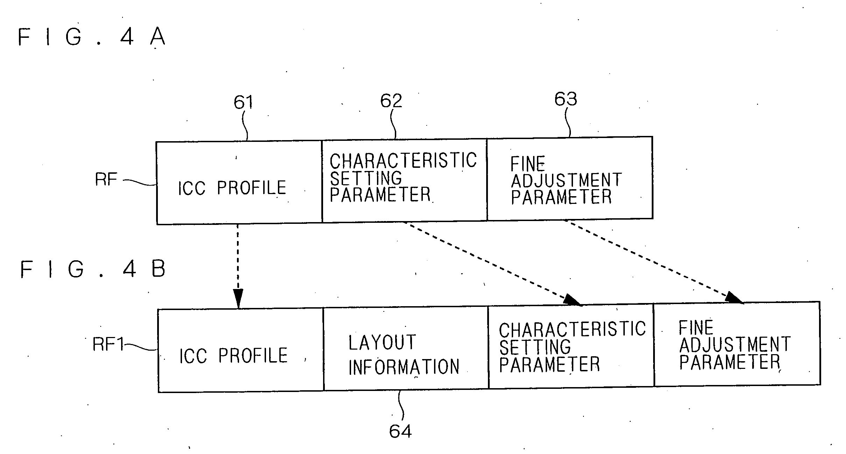

The recipe file RF will be described. The recipe file RF is a setting file containing the details of image processing to be performed in the image conversion processor 53. The recipe file RF is created in the image conversion processor 53 and stored in the storage section 42. Since a color component desired to be enhanced and a point on which importance is to be placed in color reproduction differ depending on the type of subject, a plurality of files having optimum parameter settings corresponding to the types of subjects are generally prepared as the recipe file RF. Fig. 4A schematically shows a file structure of the recipe file RF. As shown in Fig. 4A, the recipe file RF includes an ICC profile 61, a characteristic setting parameter 62, and a fine adjustment parameter 63. The image conversion processor 53 references the contents of the recipe file RF from the left hand side of Fig. 4A to perform corresponding processing.

The ICC profile 61 is a reference profile set for maintaining the color reproducibility of the printing-specific photograph data, and is common to images when used.

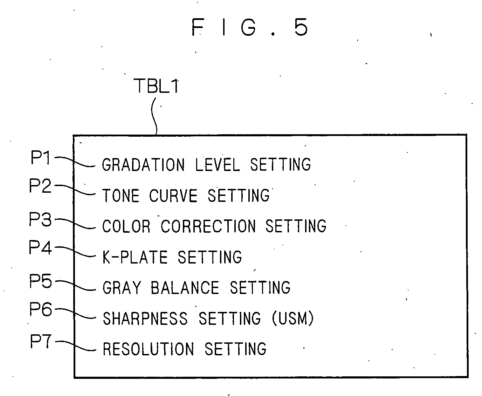

The characteristic setting parameter 62 is intended to set various items which determine the characteristics of the printing-specific photograph data in accordance with the contents of an image, such as the type of subject. Thus, setting the items of the characteristic setting parameter 62 in accordance with the type of subject creates the recipe file RF suitable for the subject. Fig. 5 shows a setting item table TBL1 including a list of setting items of the characteristic setting parameter 62. The setting items of the characteristic setting parameter 62 are as follows: A gradation level setting P1 is an item for setting the density range of halftone dots. A tone curve setting P2 is an item for setting a mid-tone or a half tone by means of a tone curve. A color correction setting P3 is an item for correcting a deviation from an ideal color characteristic of an ink. A K-plate setting P4 is an item for setting UCR (under color removal), GCR (gray component replacement) and the like for replacing an overlap between CMY colors with a K plate. A gray balance setting P5 is an item for setting a balance between CMY colors for proper gray representation. A sharpness setting P6 is an item for enhancing the sharpness of an image by the use of USM (unsharp masking) or the like. A resolution setting P7 is an item for converting the resolution of an image in an pixel interpolation process or the like.

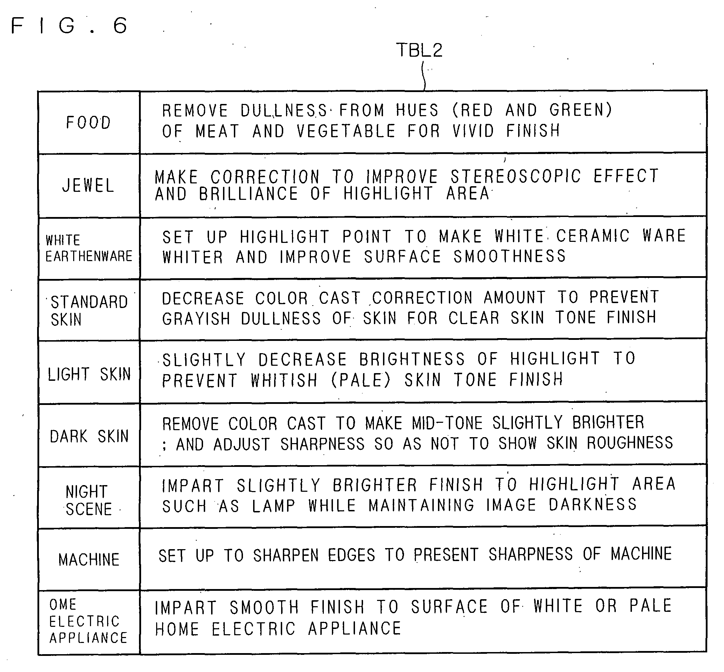

Fig. 6 shows a correction detail table TBL2 including a list of details of image corrections required for image processing of typical subjects. The recipe file RF in which the items of the characteristic setting parameter 62 are suitably set in accordance with characteristics shown in the correction detail table TBL2 is created and used for processing an image including each subject.

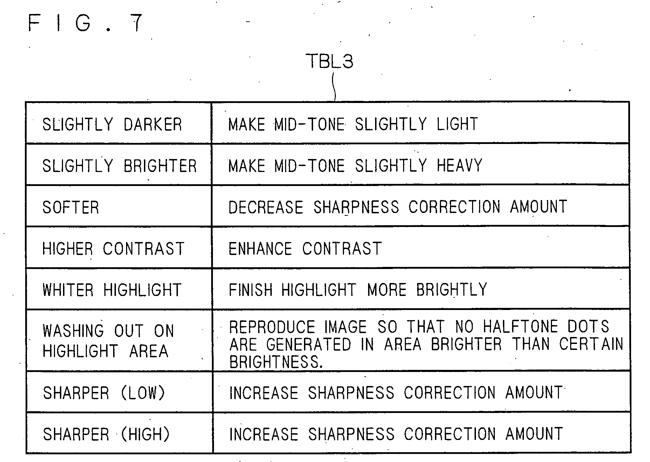

The fine adjustment parameter 63 is set to make an additional fine adjustment to each item of the characteristic setting parameter 62. Fig. 7 shows a fine adjustment menu table TBL3 including a typical processing menu of the fine adjustment parameter 63.

The created recipe file RF is combined with the layout information by the processing detail generator 52 as described above, and is then transferred to the image conversion processor 53.

The processing detail generator 52 includes a recipe file selector 521, and a recipe file combiner 522.

The recipe file selector 521 is intended to select a recipe file RF suitable for the contents of an image for each printing-specific photograph data arranged for the layout. The recipe file combiner 522 is intended to combine the layout information with the selected recipe file RF. When an operator causes the recipe file selector 521 to function through the manipulation section 43 to select the recipe file RF suitable for each printing-specific photograph data arranged for the layout, the recipe file combiner 522 combines the layout information for each printing-specific photograph data with the recipe file RF. Fig. 4B shows a structure of a recipe file RF1 with which layout information 64 is combined. The layout information 64 is combined so as to be placed between the ICC profile 61 and the characteristic setting parameter 62. Thus, the layout information 64 is referenced subsequently to the ICC profile 61 by the image conversion processor 53.

The recipe file RF after the combination is temporarily stored in the storage section 42. When an operator gives a predetermined execution command through the manipulation section 43, for example, by dragging and dropping the layout data into a predetermined data folder (referred to hereinafter as a "hot folder") prepared in the storage section 42, the recipe file RF together with the printing-specific photograph data to be processed is read from the storage section 42 and subjected to processing in the image conversion processor 53.

The image conversion processor 53 is intended to perform the CMYK conversion process and various image correction processes in accordance with the recipe file RF as mentioned above while considering the printing-specific photograph data being arranged for the layout. To this end, the image conversion processor 53 principally comprises an execution command detector 531, a recipe file analyzer 532, a color space converter 533, a color tone corrector 534, a sharpness corrector 535, a resolution converter 536, and a recipe file creator 537.

The execution command detector 531 always monitors the presence or absence of a command to execute an image conversion process from the operator, e.g. whether or not the layout data is dragged and dropped into the hot folder. Upon detection of an execution command, the execution command detector 531 reads the printing-specific photograph data to be processed and the recipe file RF corresponding thereto from the storage section 42.

The recipe file analyzer 532 analyzes the contents of the recipe file RF read from the storage section 42. The color space converter 533 generates CMYK-converted printing-specific photograph data. After the CMYK conversion, the components to be described next perform processing in accordance with the settings in the characteristic setting parameter 62 and the fine adjustment parameter 63 of the recipe file RF.

The color tone corrector 534 performs a density level correction and a tone curve correction in accordance with the contents of the recipe file RF. The sharpness corrector 535 performs an USM correction in accordance with the contents of the recipe file RF. The resolution converter 536 converts the resolution of an image in accordance with the contents of the recipe file RF. The printing-specific photograph data subjected to these processes in the respective components is temporarily stored in the storage section 42.

The recipe file creator 537 sets the characteristic setting parameter 62 and the fine adjustment parameter 63 as described above to create the recipe file RF. Alternatively, the recipe file RF may be created by actually displaying an image and manipulating the displayed image by using software for performing a conversion process.

The printing-specific photograph data subjected to the various processes in the image conversion processor 53 and represented in the CMYK color system is then subjected to the replacement process in the image replacement processor 54.

The image replacement processor 54 comprises a conversion process detector 541 and a layout information replacer 542. The conversion process detector 541 monitors whether or not the printing-specific photograph data subjected to the image conversion process is present in the image conversion processor 53. When the conversion process detector 541 detects such printing-specific photograph data, the layout information replacer 542 creates new photograph layout information in which the association with the printing-specific photograph data is changed to that with the printing-specific photograph data subjected to the CMYK conversion, and replaces the photograph layout information in the layout data with the new photograph layout information. The layout data after the replacement is provided as the print data to the output device 7.

### <Procedure for Generation of Print Data>

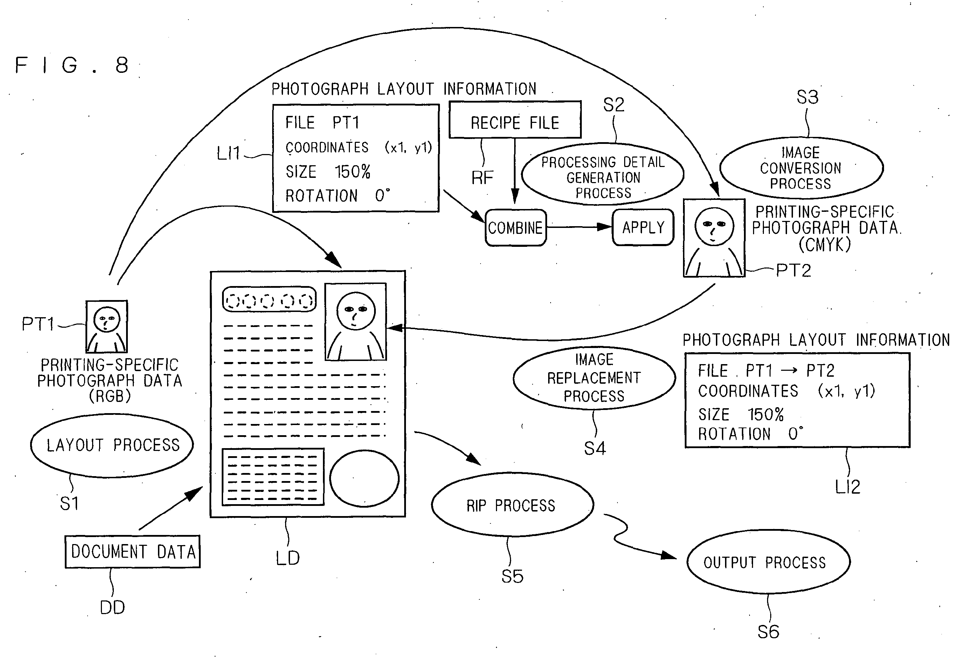

Next, description will be given on a procedure of processing for generation of the print data in the layout data generation device 4 by the use of a specific example. Fig. 8 illustrates the procedure for generation of the print data in the layout data generation device 4.

First, printing-specific photograph data and document data to be arranged for the layout of a print to be produced are prepared, and the layout process is executed by the function of the layout creator 51 (in Step S1). It is assumed that arranging printing-specific photograph data PT1 and document data DD for the layout generates layout data LD. The printing-specific photograph data PT1 has been subjected to the color space conversion process by the printing-specific photograph generation device 3 and then stored in the storage section 42, as described above. The document data DD is stored, for example, in a text file format into the storage section 42. While viewing how the layout is being done on the display section 44, an operator manually operates the manipulation section 43 to execute the layout process, thereby determining the arrangement of the printing-specific photograph data PT1 and the document data DD for the layout. Although changeable at all times during the execution of the layout, the layout information for the printing-specific photograph data PT1 and the document data DD which are components of the layout data LD are held in their latest versions by the layout information holder 511, and are established when the layout is defined.

In the specific example shown in Fig. 8, it is assumed that the layout information established for the printing-specific photograph data PT1 is photograph layout information LI1. The photograph layout information LI1 indicates that the printing-specific photograph data PT1 is arranged for the layout at a position with coordinates (x1, y1) as reference coordinates in a size scaled up to 150% of the original size.

After the establishment of the photograph layout information LI1, the processing detail generator 52 then executes the processing detail generation process (in Step S2). The operator selects a recipe file RF containing the details of image processing to be performed on the layout-defined printing-specific photograph data PT1 among a plurality of recipe files RF stored in the storage section 42 to store the selected recipe file RF in association with the printing-specific photograph data PT1 in the storage section 42. Additionally, the process of combining the photograph layout information LI1 with the recipe file RF is executed. The combined recipe file RF is stored in the storage section 42.

Next, when the operator drags and drops the recipe file RF and the printing-specific photograph data PT1 into the hot folder, the image conversion processor 53 executes an image conversion process (in Step S3). Specifically, the image conversion processor 53 executes the color space conversion process and the image correction process on the printing-specific photograph data PT1 in accordance with the contents of the recipe file RF. This generates printing-specific photograph data PT2 represented in the CMYK color system and subjected to the image correction the details of which are described in the recipe file RF.

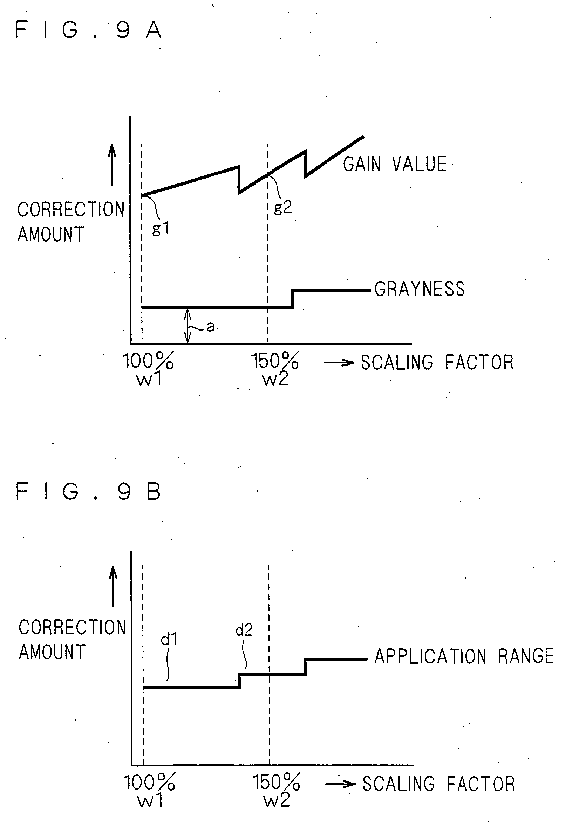

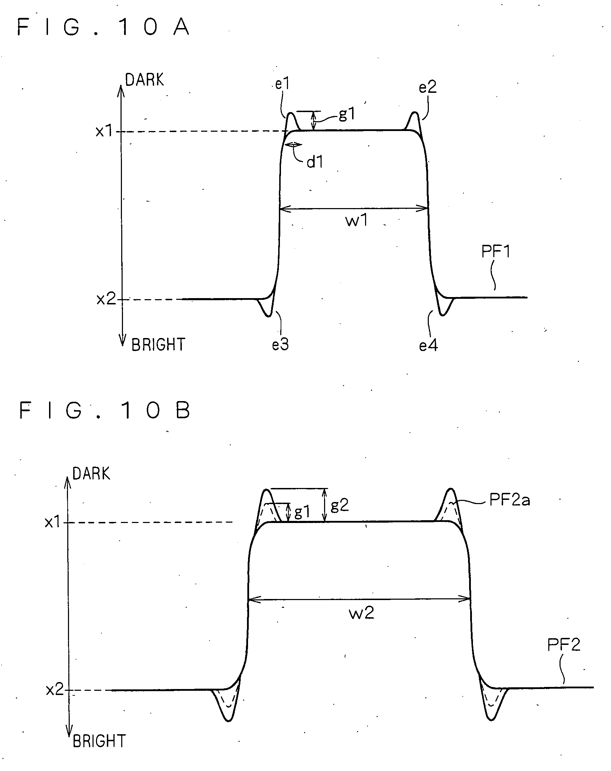

Figs. 9A, 9B, 10A and 10B are graphs illustrating a sharpness process as an example of the image correction process in the image conversion process. Figs. 9A and 9B show the relationship between a parameter of the sharpness process and a scaling factor of an image. Figs. 10A and 10B illustrate changes in color density profile depending on the sharpness process. The sharpness process is implemented by the action of the sharpness corrector 535, and is the process of enhancing the sharpness of an image by making a correction so as to make a dark portion darker and a bright portion brighter in locations where the color density profile of the image changes. The gain value of Fig. 9A corresponds to the amount of increase/decrease of the density in the sharpness process. The application range of Fig. 9B is a range over which the correction is reflected, and corresponds to a pixel size. The grayness of Fig. 9A corresponds to the threshold value of density change at which the sharpness process is performed.

Fig. 10A shows a density profile PF1 when the printing-specific photograph data is not scaled. In this case, assuming that the density profile PF1 includes a portion having a density x1 greater than the surrounding density x2, and a width w1, the density correction is made by the amount of a gain g1 over an application range d1 at edges e1 to e4 in accordance with Figs. 9A and 9B.

Fig. 10B shows a density profile PF2 after the 150% scale-up of an image corresponding to the density profile PF1. The scale-up of the image causes the portion having the density x1 to have a width w2 which is 150% of the width w1 prior to the scale-up. At this time, if the application range and the gain value remain equal to those prior to the scale-up, such as those of a density profile PF21a indicated by the broken lines, the correction process produces a relatively low effect to result in insufficient sharpness correction. For sufficient sharpness correction, it is necessary to determine the degree of application depending on the scaling factor, that is, the image size. In the case of 150% scale-up, the sharpness correction using an application range d2 and a gain value g2 in accordance with Figs. 9A and 9B produces an effect equivalent to that prior to the scale-up.

Although only the sharpness correction is described herein, any of the image correction processes, such as the color tone correction, in the image conversion processor 53 may make a suitable correction depending on the size of an image arranged for the layout (or the scaling factor of the image with respect to the original size) to produce a print of higher quality.

After the image conversion process is completed to provide the printing-specific photograph data PT2 represented in the CMYK color system, the image replacement processor 54 rewrites the file information in the photograph layout information LI1 from the printing-specific photograph data PT1 used for the layout to the printing-specific photograph data PT2 obtained after the CMYK conversion. This rewriting creates new photograph layout information LI2. This is the image replacement process (in Step S4). Then, the layout data LD containing the new photograph layout information LI2 is RIP-processed (in Step S5) by the output device 7, and subjected to the output process as the print data (in Step S6). Since the information about the size and the like is unchanged, the print data is subjected to the output process in the subsequent stage while the appearance of the layout is maintained.

As described hereinabove, the procedure according to the first preferred embodiment of the present invention includes: first doing the layout of the print, then combining the layout information with the recipe file in the processing detail generator 52, and thereafter performing the image conversion process. This allows the execution of the image correction process suitable for photographs being arranged for the layout of the print without the need to manually set the sizes of individual printing-specific photograph data one by one. Since the image conversion processor 53 automatically performs the image conversion process upon detection of the execution command from the operator, efficient processing is carried out. Additionally, the image replacement processor 54 performs the image replacement process for automatically replacing the original printing-specific photograph data with the printing-specific photograph data for printing obtained by the image conversion process. This reduces operating burdens on the operator and avoids printing errors such as mix-up between printing-specific photograph data.

### <Modifications of First Preferred Embodiment>

In the first preferred embodiment described above, the functions of the processing detail generator 52 and the image replacement processor 54 are implemented by the programs 422 and 424 which are the plug-in programs for the program 421 implementing the function of the layout creator 51. However, the functions of the processing detail generator 52 and the image replacement processor 54 may be implemented by the program 421.

The image conversion processor may be implemented as an independent device in a computer different from the personal computer which implements the layout data generation device, and both of the devices may be connected to each other through a network.

The printing-specific photograph generation device 3 may comprise an image conversion processor 314 for converting the printing-specific photograph data into printing-specific photograph data represented in another color space, e.g. the CMYK color system. In this modification, the image conversion processor 314 can simulate the image conversion process to be carried out in the layout data generation device 4. Therefore, this modification enables, for example, a photographer who acquires raw photograph data with the digital camera 2 to photograph while considering how the raw photograph data will be reproduced on a print. Additionally, this modification enables the photographer to create a recipe file and to pass the recipe file together with the printing-specific photograph data to the layout data generation device 4.

### Second Preferred Embodiment

### <System Construction>

In the first preferred embodiment, the details of image processing to be performed in the image conversion processor 53 of the layout data generation device 4 are defined as the recipe file RF by the processing detail generator 52, and the layout information about the printing-specific photograph is combined with the recipe file RF, following which the image conversion process is performed. Therefore, the first preferred embodiment shows that the image correction process suitable for the photographs being arranged for the layout is carried out without the need to manually set the sizes of individual specific-specific photograph data one by one. However, components of the printing system 1 which perform an image conversion process are not limited to the image conversion processor 53 of the layout data generation device 4. In place of the image conversion processor 53, an image conversion processor 81 to be described later provided in the output device 7 may perform a predetermined image conversion process such as a color space conversion process. In such a case, the recipe file RF is also used. In a second preferred embodiment according to the present invention, the details of image processing to be performed in the image conversion processor 81 provided in the output device 7 are defined as a recipe file RF (RFb), and the recipe file RFb containing the layout information is passed with the layout data to the output device 7, whereby the image conversion processor 81 in the output device 7 performs a conversion process and an image correction process in consideration for the conditions (size, orientation and the like) of the printing-specific photograph data actually arranged for the layout. Components similar to those of the first preferred embodiment are designated by the same reference numerals and characters in the second preferred embodiment, and the description of the components are partly omitted.

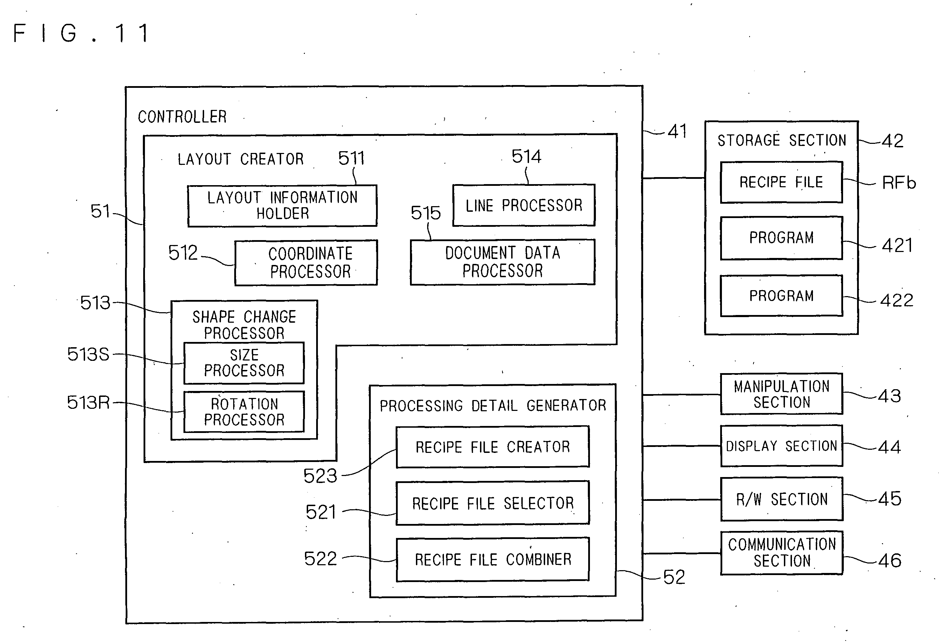

Fig. 11 is a diagram illustrating the functions implemented in the controller 41 of the layout data generation device 4 according to the second preferred embodiment. For purposes of illustration, components relating to functions which are not directly relevant to the second preferred embodiment are not shown in Fig. 11. The layout creator 51 and the processing detail generator 52 are also implemented in the controller 41 of the second preferred embodiment by the execution of the predetermined programs 421 and 422 stored in the storage section 42 under the action of the CPU 41a, the ROM 41b and the RAM 41c, as in the first preferred embodiment.

In the second preferred embodiment, the processing detail generator 52 combines the layout information for the printing-specific photograph data and the recipe file RFb together. Thereafter, the combined recipe file RFb and the layout data are passed to the output device 7, whereby the image conversion processor 81 in the output device 7 performs the conversion process and the image correction process in consideration for the conditions (size, orientation and the like) of the printing-specific photograph data actually arranged for the layout. The structure and contents of the recipe file RFb are similar to those of the recipe file RF shown in Figs. 4A, 4B, and 5-7 in the first preferred embodiment. The image conversion processor 81 of the output device 7 performs the image conversion process based on the recipe file RFb, thereby to accomplish the image correction process intended to enhance the texture of a subject which is irreproducible or is not enhanced on the print merely by the CMYK conversion.

The processing detail generator 52 mainly responsible for the processing of such a recipe file RFb comprises the recipe file selector 521, the recipe file combiner 522, and a recipe file creator 523.

The recipe file selector 521 is intended to select a recipe file RFb suitable for the contents of an image for each printing-specific photograph data arranged for the layout. The recipe file combiner 522 is intended to combine the layout information with the selected recipe file RFb. When an operator causes the recipe file selector 521 to function through the manipulation section 43 to select the recipe file RFb suitable for each printing-specific photograph data arranged for the layout, the recipe file combiner 522 combines the layout information for each printing-specific photograph data with the recipe file RFb. In the second preferred embodiment, the layout information 64 is combined so as to be placed between the ICC profile 61 and the characteristic setting parameter 62 in a similar manner to the first preferred embodiment as shown in Figs. 4A and 4B. Thus, the layout information 64 is referenced subsequently to the ICC profile 61 by the image conversion processor 81. The recipe file creator 523 is intended to enable the operator himself or herself to suitably set the characteristic setting parameter 62 and the fine adjustment parameter 63 to create the recipe file RFb so as to cause the output device 7 to perform a desired image correction process.

The recipe file RFb, as described above, is combined with the layout information by the processing detail generator 52, and thereafter passed with the corresponding layout data to the image conversion processor 81 of the output device 7 in response to a command from the operator through the manipulation section 43. In practice, the data (printing-specific photograph data, document data, and line data) about each object arranged for the layout is also passed together with the layout data to the image conversion processor 81. Alternatively, the data about each object may be embedded in the layout data, such as data in PostScript (trademark of Adobe Systems Inc.) format or PDF (Portable Document Format), and be passed to the image conversion processor 81.

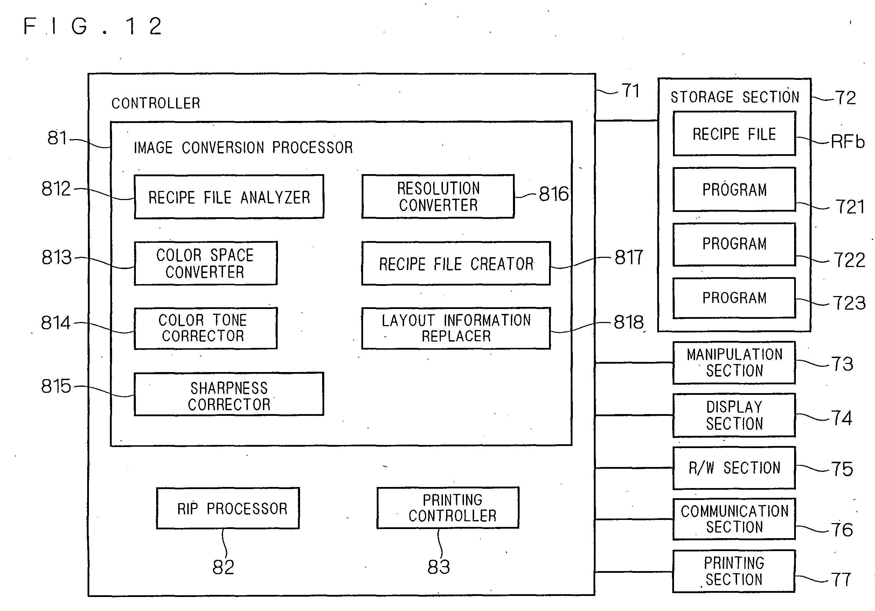

Fig. 12 is a diagram illustrating the functions implemented in the controller 71 of the output device 7. The image conversion processor 81, a RIP processor 82 and a printing controller 83 are implemented in the controller 71 by the execution of predetermined programs 721 to 723 stored in the storage section 72 under the action of the CPU 71a, the ROM 71b and the RAM 71c. The image conversion processor 81 is implemented by the program 721 which is so-called image processing software, and the RIP processor 82 is implemented by the program 722. The printing controller 83 is implemented by the program 723.

The image conversion processor 81 is provided to perform a color space conversion process for CMYK-converting the printing-specific photograph data and a predetermined image correction process, in accordance with the contents of the corresponding recipe file RFb for each printing-specific photograph data arranged for the layout in the layout data passed from the layout data generation device 4, and to thereafter perform a replacement process on the printing-specific photograph data, thereby providing the print data.

The image conversion processor 81 principally comprises a recipe file analyzer 812, a color space converter 813, a color tone corrector 814, a sharpness corrector 815, a resolution converter 816, a recipe file creator 817, and a layout information replacer 818.

The recipe file analyzer 812 analyzes the contents of the recipe file RFb. The color space converter 813 generates CMYK-converted printing-specific photograph data. After the CMYK conversion, the components to be described next perform processing in accordance with the settings in the characteristic setting parameter 62 and the fine adjustment parameter 63 of the recipe file RFb.

The color tone corrector 814 performs a density level correction and a tone curve correction in accordance with the contents of the recipe file RFb. The sharpness corrector 815 performs an USM correction in accordance with the contents of the recipe file RFb. The resolution converter 816 converts the resolution of an image in accordance with the contents of the recipe file RFb. The printing-specific photograph data subjected to these processes in the respective components is temporarily stored in the storage section 72.

The layout information replacer 818 creates new photograph layout information in which the printing-specific photograph data subjected to the CMYK conversion is associated with the photograph layout information originally contained in the layout data, and replaces the original photograph layout information in the layout data with the new photograph layout information. The layout data generated by such replacement is the print data which in turn is passed to the next RIP process.

The recipe file creator 817 sets the characteristic setting parameter 62 and the fine adjustment parameter 63 to generate the recipe file RFb in a similar manner to the recipe file creator 523 of the layout data generation device 4. The recipe file creator 817 is also responsible for a modification process of the recipe file RFb generated once and then stored in the storage section 72.

The RIP processor 82 is provided to perform the RIP process for rasterizing the print data in which the printing-specific photograph data represented in the CMYK color system for printing and the photograph layout information are associated with each other as described above to provide raster data processable in a printing machine and corresponding to the plates of respective CMYK colors. A known technique may be used as the RIP process technique.

The printing controller 83 is provided to control the execution of printing in the printing section 77. In accordance with the control of the printing controller 83, the printing section 77 performs printing on a predetermined printing sheet, based on the data about the plates of respective colors obtained by the RIP process.

### <Procedure for Generation of Print Data>

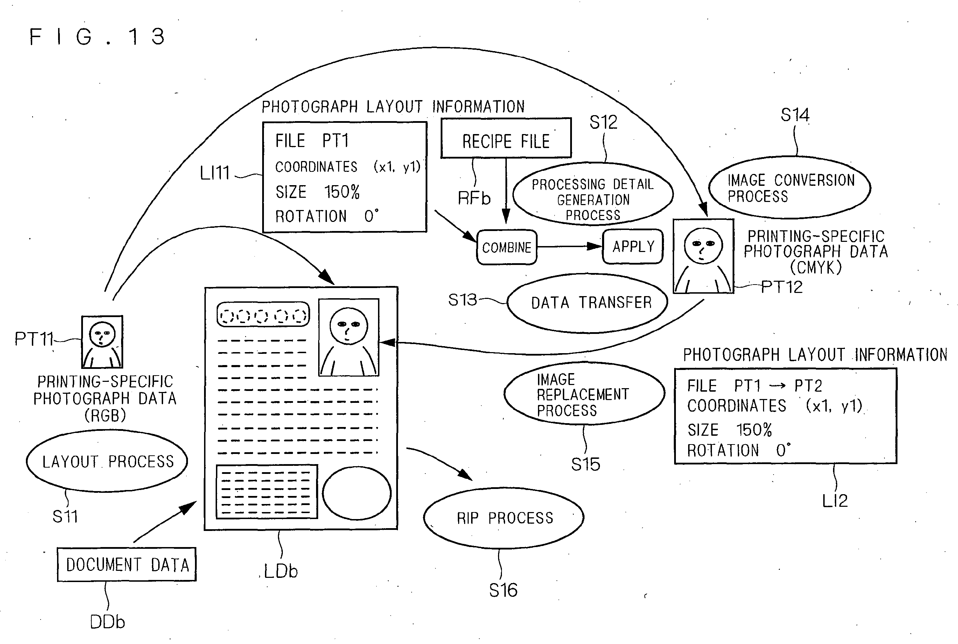

Next, description will be given on a procedure of processing from the generation of the layout data in the layout data generation device 4 to the printing in the output device 7. Fig. 13 illustrates a procedure of processing from the generation of the layout data to the RIP process.

First, printing-specific photograph data and document data to be arranged for the layout of a print to be produced are prepared, and the layout process is executed by the function of the layout creator 51 (in Step S11). It is assumed that arranging printing-specific photograph data PT11 and document data DDb for the layout generates layout data LDb. The printing-specific photograph data PT11 has been obtained by photographing a person. As described above, the printing-specific photograph data PT11 has been subjected to the color space conversion process by the printing-specific photograph generation device 3 and then stored in the storage section 42. The document data DDb is stored, for example, in a text file format into the storage section 42. While viewing how the layout is being done on the display section 44, an operator manually operates the manipulation section 43 to execute the layout process, thereby determining the arrangement of the printing-specific photograph data PT11 and the document data DDb for the layout. Although changeable at all times during the execution of the layout, the layout information for the printing-specific photograph data PT11 and the document data DDb which are components of the layout data LDb are held in their latest versions by the layout information holder 511, and are established when the layout is defined.

In the specific example shown in Fig. 13, it is assumed that the layout information established for the printing-specific photograph data PT11 is photograph layout information LI11. The photograph layout information LI11 indicates that the printing-specific photograph data PT11 is arranged for the layout at a position with coordinates (x1, y1) as reference coordinates in a size scaled up to 150% of the original size.

After the establishment of the photograph layout information LI11, the processing detail generator 52 then executes the processing detail generation process (in Step S12). When the operator selects a recipe file RFb containing the details of image processing to be performed on the layout-defined specific-specific photograph data PT11 among a plurality of recipe files RFb stored in the storage section 42, the process of combining the photograph layout information LI11 with the recipe file RFb is executed. The combined recipe file RFb is stored in the storage section 42.

After the completion of the entire layout process, the layout data LDb (including object data such as the printing-specific photograph data arranged for the layout) and the recipe file RFb are transferred from the layout data generation device 4 to the output device 7 (in Step S13).

In the output device 7, the received data are temporarily stored in the storage section 72. Then, when the operator gives a predetermined execution command through the manipulation section 73, the image conversion processor 81 executes the image conversion process (in Step S14). Specifically, the image conversion processor 81 executes the color space conversion process and the image correction process on the printing-specific photograph data PT11, based on the contents of the recipe file RFb. This generates printing-specific photograph data PT12 represented in the CMYK color system and subjected to the image correction the details of which are described in the recipe file RFb.

Subsequently, the layout information replacer 818 rewrites the file information in the photograph layout information LI11 from the printing-specific photograph data PT11 used for the layout to the printing-specific photograph data PT12 obtained after the CMYK conversion. This rewriting creates new photograph layout information LI12. This is the image replacement process (in Step S15). Then, the layout data LDb containing the new photograph layout information LI12 is passed as the print data to the RIP process (in Step S16).

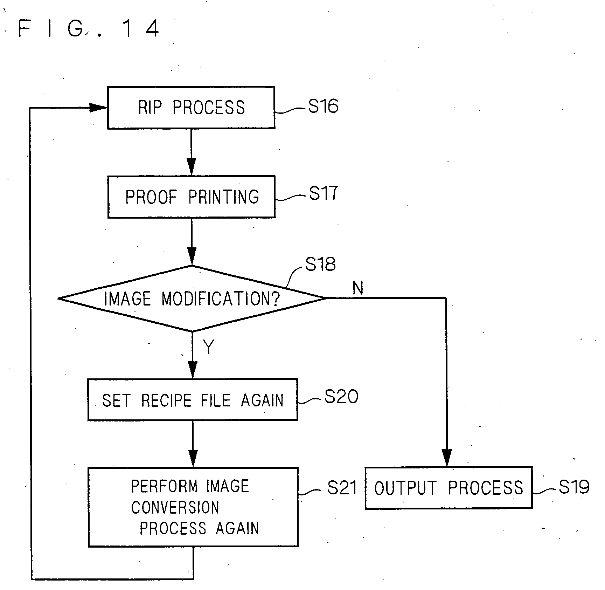

Fig. 14 is a flowchart illustrating a procedure of processing from the RIP process to the output process. The RIP process of the print data generates separation data corresponding to the plates of respective CMYK colors. Using these separation data, a proof printing for making checks of the validity of the RIP process and the color reproducibility in printing is carried out (in Step S17). The proof printing may be carried out in the printing section 77 based on the control of the printing controller 83. When the printing system 1 comprises the proofing device 8, the separated print data may be sent to the proofing device 8 which in turn carries out the proof printing. If there is no problem as a result of the check of a galley proof (or proof sheet) obtained by the proof printing, the full-scale output process, i.e. printing by the printing section 77, is performed (Step S19). Alternatively, the print data is temporarily stored in the storage section 72, and printing is carried out in response to a command from the operator through the manipulation section 73.

If the result of the proof is insufficient, e.g. an intended color for the printing-specific photograph data is not represented on the galley proof, then it is necessary to execute the CMYK conversion on the printing-specific photograph data and the subsequent image correction process again. In the second preferred embodiment, since these processes are executed in accordance with the recipe file RFb, it is necessary to set the recipe file RFb again so that the intended color is represented on the print. The recipe file creator 817 in the output device 7 according to the second preferred embodiment can modify the existing recipe file RFb and set a new recipe file RFb. Therefore, the recipe file creator 817 sets the recipe file again (in Step S20), and subsequently the image conversion processor 81 can perform the image conversion process (in Step S21) again.

As an example, a slightly bluish skin color of a person as the subject of the printing-specific photograph data PT11 on the galley proof gives the impression that he/she is less healthy than on an intended finish. In such a case, it is necessary to change the settings of the recipe file RFb so that the color tone corrector 814 of the image conversion processor 81 performs the correction process in accordance with a tone curve with a lower mid-tone than a C (cyan) tone curve initially set in the recipe file RFb.

After the recipe file RFB is modified in this manner, the image conversion processor 81 performs the image conversion process again on the printing-specific photograph data PT11. Then, the RIP process and the proof printing are executed on the new print data. If the problem has been overcome as a result of the second proof printing, the processing moves to the normal output process. If there is an additional problem, the processing returns to the setting of the recipe file again.

The recipe files RFb are set for the individual printing-specific photograph data, respectively. It is hence necessary to process only one or some of the printing-specific photograph data having a problem in color proof. Since the modification operation is completed by the use of only the process in the output device 7 and only the printing-specific photograph data required to be processed again, there is no need to perform the modification process on the entire layout data by returning to the layout data generation device 4.

As described hereinabove, the output device 7 according to the second preferred embodiment converts the printing-specific photograph data represented in the RGB color system into the data represented in the CMYK color system for printing, in addition to performing the RIP process and the subsequent printing process, and performs the image conversion process for performing the predetermined correction process. Furthermore, the output device 7 is also capable of creating and modifying the recipe file which is a setting file about the details of the image conversion process. Thus, if there is a problem in color reproducibility of certain printing-specific photograph data as a result of proof printing, the output device 7 can set again the recipe file corresponding to only the certain printing-specific photograph data having the problem, and perform the image conversion process again based on the recipe file set again. There is no need to return to the processing in the layout data generation device to perform the modification process on the entire layout data. This suppresses delays in the printing process due to the modification, and furthermore suppresses the occurrence of problems resulting from the mix-ups of the processing procedure.

### <Modifications of Second Preferred Embodiment>

Although the recipe file is used as the setting file for the image conversion process in the second preferred embodiment, a JDF (Job Definition Format) file described in XML (extensible Markup Language) format may be used as the recipe file. The use of the JDF file having general versatility in the workflow of printing allows not only the setting of the image conversion process but also the setting of integrated processes including other processes.

In the second preferred embodiment, the output device 7 comprises the printing section 77 to perform printing based on the RIP-processed separation data. Instead, the output device 7 may produce prepress films based on the separation data. For instance, the output device 7 may be embodied as an image setter having the RIP processing capability. Alternatively, the output device 7 may directly produce plates based on the separation data, that is, may be embodied as a CTP (Computer To Plate) device having the RIP processing capability. In these cases, a chemical proofing device or a flatbed proofing device may be used as the proofing device 8.

The output device 7 is responsible for the processes from the image conversion process to the output process in the second preferred embodiment. However, a RIP device for performing the image conversion process and the RIP process, and an output device may be separately provided. Such a modification also produces the effects of the present invention by performing the RIP process and its preceding processes in the RIP device and transferring the print data to the output device.

While the invention has been described in detail, the foregoing description is in all aspects illustrative and not restrictive. It is understood that numerous other modifications and variations can be devised without departing from the scope of the invention.

## Claims

1. A printing system including at least one data processing device, said at least one data processing device comprising:
a layout creation element for generating layout data about a print including a photograph represented by first printing-specific photograph data to hold layout information about said first printing-specific photograph data associated with a layout result, said first printing-specific photograph data being digital data represented in an RGB color system;
a layout information combination element for combining said layout result with a setting file;
a color space conversion element for converting said first printing-specific photograph data into second printing-specific photograph data, said second printing-specific photograph data being digital data represented in a CMYK color system;
a correction element for correcting said second printing-specific photograph data; and
a replacement element for changing the association between said layout result and said first printing-specific photograph data in said layout information into association between said layout result and said second printing-specific photograph data,
said setting file describing details of processes to be executed by said color space conversion element, said correction element, and said replacement element,
said layout data subjected to the association change being passed to a rasterization process.

2. The printing system according to claim 1, wherein
said first printing-specific photograph data is obtained by converting image data acquired by a digital camera into data represented in a standard color system independent of the type of digital camera.

3. The printing system according to claim 2, wherein
said at least one data processing device is one layout data generation device.

4. The printing system according to claim 2, wherein
said layout creation element and said layout information combination element are provided in one layout data generation device, and the remaining elements are provided in a print data processing device different from said layout data generation device, and
said print data processing device further comprises
a rasterization process element for rasterizing said layout data subjected to the association change to generate print data.

5. The printing system according to claim 4, wherein
said print data processing device further comprises
a setting file creation element for creating and modifying said setting file, and
said print data processing device causes said setting file creation element to set a new setting file again and to perform an image conversion process again based on the new setting file when proof printing based on said print data produces an improper result.

6. A device for generating layout data for defining a layout of a print, said device comprising:
a layout creation element for generating layout data about a print including a photograph represented by first printing-specific photograph data to hold layout information about said first printing-specific photograph data associated with a layout result, said first printing-specific photograph data being digital data represented in an RGB color system;
a layout information combination element for combining said layout result with a setting file;
a color space conversion element for converting said first printing-specific photograph data into second printing-specific photograph data, said second printing-specific photograph data being digital data represented in a CMYK color system;
a correction element for correcting said second printing-specific photograph data; and
a replacement element for changing the association between said layout result and said first printing-specific photograph data in said layout information into association between said layout result and said second printing-specific photograph data,
said setting file describing details of processes to be executed by said color space conversion element, said correction element, and said replacement element.

7. The device according to claim 6, wherein
said first printing-specific photograph data is obtained by converting image data acquired by a digital camera into data represented in a standard color system independent of the type of digital camera.

8. A print data processing device for performing a predetermined process on layout data for defining a layout of a print, said print data processing device comprising:
a color space conversion element for converting first printing-specific photograph data into second printing-specific photograph data, said first printing-specific photograph data being digital data representative of a photograph in layout data about a print including said photograph, said first printing-specific photograph data being represented in an RGB color system, said second printing-specific photograph data being digital data represented in a CMYK color system;
a correction element for correcting said second printing-specific photograph data;
a replacement element for changing association between a layout result and said first printing-specificphotograph data in layout information relating to said layout data into association between said layout result and said second printing-specific photograph data; and
a rasterization process element for rasterizing said layout data subjected to the association change to generate print data,
said layout result being included in a setting file describing details of processes to be executed by said color space conversion element, said correction element, and said replacement element.

9. The print data processing device according to claim 8, further comprising
a setting file creation element for creating and modifying said setting file,
said print data processing device causing said setting file creation element to set a new setting file again and to perform an image conversion process again based on the new setting file when proof printing based on said print data produces an improper result.

10. The print data processing device according to claim 9, wherein
said first printing-specific photograph data is obtained by converting image data acquired by a digital camera into data represented in a standard color system independent of the type of digital camera.

11. A program executed by a computer to cause said computer to function as a layout data generation device, said layout data generation device comprising:
a layout creation element for generating layout data about a print including a photograph represented by first printing-specific photograph data to hold layout information about said first printing-specific photograph data associated with a layout result, said first printing-specific photograph data being digital data represented in an RGB color system;
a layout information combination element for combining said layout result with a setting file;
a color space conversion element for converting said first printing-specific photograph data into second printing-specific photograph data, said second printing-specific photograph data being digital data represented in a CMYK color system;
a correction element for correcting said second printing-specific photograph data; and
a replacement element for changing the association between said layout result and said first printing-specific photograph data in said layout information into association between said layout result and said second printing-specific photograph data,
said setting file describing details of processes to be executed by said color space conversion element, said correction element, and said replacement element.

12. A program executed by a computer to cause said computer to function as a print data processing device, said print data processing device comprising:
a color space conversion element for converting first printing-specific photograph data into second printing-specific photograph data, said first printing-specific photograph data being digital data representative of a photograph in layout data about a print including said photograph, said first printing-specific photograph data being represented in an RGB color system, said second printing-specific photograph data being digital data represented in a CMYK color system;
a correction element for correcting said second printing-specific photograph data;
a replacement element for changing association between a layout result and said first printing-specific photograph data in layout information relating to said layout data into association between said layout result and said second printing-specific photograph data; and
a rasterization process element for rasterizing said layout data subjected to the association change to generate print data,
said layout result being included in a setting file describing details of processes to be executed by said color space conversion element, said correction element, and said replacement element.
